(19) Europäisches Patentamt / European Patent Office / Office européen des brevets

(11) **EP 4 436 241 A1**

(12) **EUROPEAN PATENT APPLICATION**

(43) Date of publication:
**25.09.2024 Bulletin 2024/39**

(21) Application number: **24165105.8**

(22) Date of filing: **21.03.2024**

(51) International Patent Classification (IPC):
**H04W 24/02** (2009.01)   **H04W 4/02** (2018.01)
**H04W 4/029** (2018.01)   **H04W 28/06** (2009.01)

(52) Cooperative Patent Classification (CPC):
**H04W 24/02; H04W 4/02; H04W 4/029**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.03.2023 KR 20230036887**
**20.07.2023 KR 20230094659**

(71) Applicant: **Samsung Electronics Co., Ltd.**
**Suwon-si, Gyeonggi-do 16677 (KR)**

(72) Inventors:
• **KIM, Jinho**
**16677 Suwon-si (KR)**
• **CHOI, Yoojin**
**16677 Suwon-si (KR)**

(74) Representative: **Marks & Clerk LLP**
**15 Fetter Lane**
**London EC4A 1BW (GB)**

(54) **USER EQUIPMENT FOR PERFORMING CONTROL OPERATION IN WIRELESS COMMUNICATION SYSTEM AND OPERATING METHOD OF THE USER EQUIPMENT**

(57)    An operating method of a user equipment (UE) including generating communication environment information performing wireless communication with a base station (BS), the communication environment information including position information corresponding to the UE and at least one of sensor information corresponding to the UE, information related to a reception operation of the UE or information related to a transmission operation of the UE, determining whether a current communication environment corresponds to one of a plurality of main communication environments based on the communication environment information, setting values of communication parameters to match a first main communication environment in response to determining that the current communication environment corresponds to the first main communication environment, the first main communication environment being among the plurality of main communication environments, and performing wireless communication with the BS based on the values of the communication parameters.

FIG. 5

500

START

COMPARE COMMUNICATION ENVIRONMENT INFORMATION WITH PIECES OF REFERENCE INFORMATION OF MAIN COMMUNICATION ENVIRONMENTS — S411

DETECT MAIN COMMUNICATION ENVIRONMENT CORRESPONDING TO CURRENT COMMUNICATION ENVIRONMENT BASED ON COMPARISON RESULT — S412

END

EP 4 436 241 A1

## Description

BACKGROUND

The inventive concepts relate to wireless communication, and more particularly, to a user equipment (UE) capable of recognizing a main communication environment in a wireless communication system and performing a control operation based on the recognized main communication environment, and an operating method of the UE.

To meet the increased demand for wireless data traffic after the commercialization of 4th generation (4G) communication systems, considerable efforts have been made to develop improved 5th generation (5G) communication systems. Accordingly, 5G communication systems have recently been commercialized.

In addition, to optimize or improve communication performance adaptive to a user's communication environment, studies have been conducted to develop communication systems using artificial intelligence or machine learning in wireless communication systems.

On the other hand, research on the development of communication systems adaptive to an existing communication environment recognizes only specific situations such as airplane takeoff and landing, subway station and airport location information, and elevator boarding, and thus, such systems may not be suitable for optimizing/improving the performance and power consumption of communication transceivers for an environment designated by a user or ordinary communication environments to which UEs are mainly (e.g., commonly) exposed.

SUMMARY

The inventive concepts provide a user equipment (UE) capable of recognizing a communication environment designated by a user or a communication environment to which the UE is mainly (e.g., frequently) exposed based on communication environment information, and performing a control operation based on the recognized communication environment, and an operating method of the UE. Embodiments provide for the optimization and/or improvement of communication performance adaptive to an environment designated by a user or ordinary communication environments to which UEs are mainly exposed.

According to an aspect of the inventive concepts, there is provided an operating method of a UE, the operating method including generating communication environment information performing wireless communication with a base station (BS), the communication environment information including position information corresponding to the UE and at least one of sensor information corresponding to the UE, information related to a reception operation of the UE or information related to a transmission operation of the UE, determining whether a current communication environment corresponds to one of a plurality of main communication environments based on the communication environment information, setting values of communication parameters to match a first main communication environment in response to determining that the current communication environment corresponds to the first main communication environment, the first main communication environment being among the plurality of main communication environments, and performing wireless communication with the BS based on the values of the communication parameters.

According to an aspect of the inventive concepts, there is provided an operating method of a UE, the operating method including periodically generating communication environment information by performing wireless communication with a base station (BS), the communication environment information including position information corresponding to the UE and at least one of sensor information corresponding to the UE, information related to a reception operation of the UE, or information related to a transmission operation of the UE, determining whether a current communication environment corresponds to one of a plurality of main communication environments based on the communication environment information, setting values of communication parameters to match a first main communication environment in response to determining that the current communication environment corresponds to the first main communication environment, the first main communication environment being among the plurality of main communication environments, and a second main communication environment among the plurality of main communication environments being set to correspond to a specific communication environment indicated by an input received from a user interface of the UE, and performing wireless communication with the BS based on the values of the communication parameters.

According to an aspect of the inventive concepts, there is provided a UE for wireless communication, the UE including processing circuitry configured to generate communication environment information, the communication environment information including position information about the UE, sensor information about the UE, information related to a reception operation of the UE, and information related to a transmission operation of the UE, determine whether a current communication environment corresponds to one of a plurality of main communication environments based on the communication environment information, and set values of communication parameters such that the current communication environment matches a first main communication environment, the first main communication environment being among the plurality of main communication environments.

At least some of the above and other features of the invention are set out in the claims.

BRIEF DESCRIPTION OF THE DRAWINGS

Embodiments will be more clearly understood from the following detailed description taken in conjunction with the accompanying drawings in which:

FIG. 1A is a block diagram illustrating a wireless communication system according to embodiments;
FIG. 1B is a diagram illustrating a basic structure of a time-frequency domain, which is a radio resource area, in a wireless communication system, according to embodiments;
FIG. 2 is a block diagram illustrating an implementation example of a user equipment (UE) according to embodiments;
FIG. 3 is a block diagram illustrating an implementation example of a UE according to embodiments;
FIG. 4 is a flowchart for describing a main communication environment recognition operation of a UE, according to embodiments;
FIG. 5 is a flowchart for describing a main communication environment detection operation of a UE, according to embodiments;
FIG. 6A is a flowchart for describing an operation of determining whether to update a main communication environment of a UE, according to embodiments;
FIG. 6B is a block diagram illustrating an implementation example of a memory of a UE, according to embodiments;
FIG. 7 is a flowchart for describing a wireless communication performing operation of a UE, according to embodiments;
FIG. 8A is a block diagram illustrating an electronic device according to embodiments;
FIG. 8B is a block diagram illustrating an implementation example of a machine learning module of an electronic device, according to embodiments; and
FIG. 9 is a conceptual diagram illustrating an Internet of things (IoT) network system according to embodiments.

DETAILED DESCRIPTION

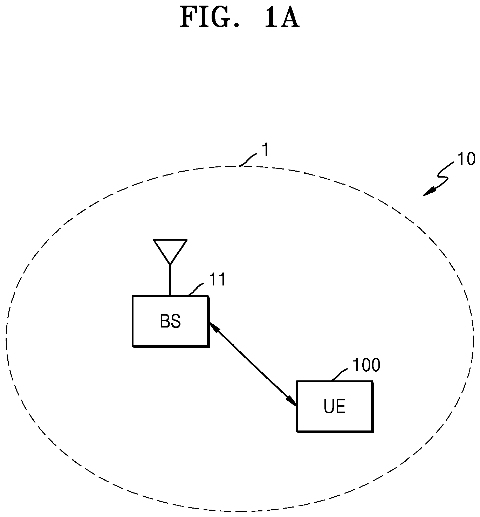

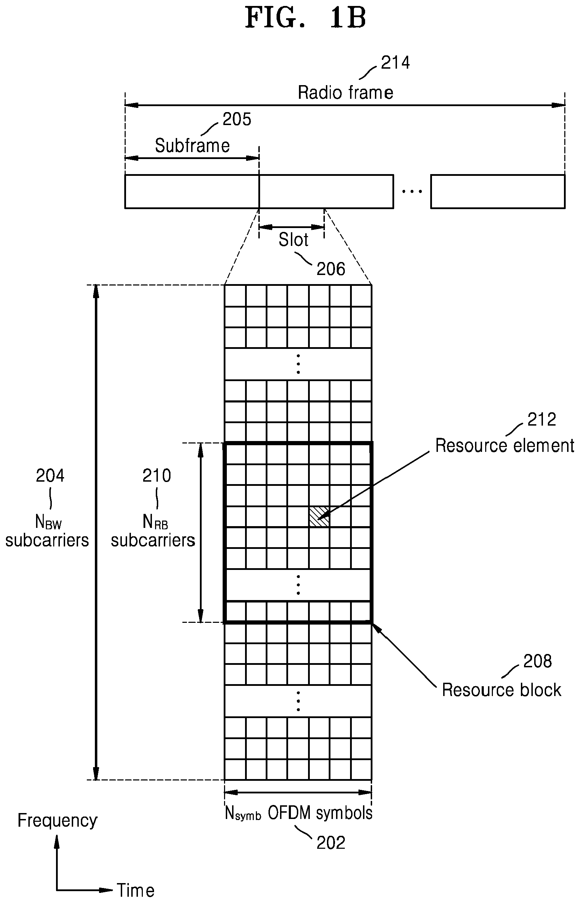

FIG. 1A is a block diagram illustrating a wireless communication system 10 according to embodiments. FIG. 1B is a diagram illustrating a basic structure of a time-frequency domain, which is a radio resource area, in the wireless communication system 10, according to embodiments.

Although embodiments are described below based on a new radio (NR) network-based wireless communication system 10, and in particular, a 3rd generation partnership project (3GPP) release, the inventive concepts are not limited to an NR network. The inventive concepts may also be applied to other wireless communication systems having similar technical background or channel settings, e.g., cellular communication systems for next-generation communications such as long-term evolution (LTE), LTE-advanced (LTE-A), wireless broadband (WiBro), global system for mobile communication (GSM) or 6th generation (6G), or short-range communication systems such as Bluetooth and near field communication (NFC).

In embodiments described below, hardware approaches are described as examples. However, embodiments include technology using both hardware and software, and do not exclude software-based approaches.

Various functions described below may be implemented or supported by artificial intelligence technology or one or more computer programs, each of which may be implemented as computer-readable program code and may be executed on a computer-readable recording medium. The terms "application" and "program" refer to one or more of computer programs, software components, sets of instructions, procedures, functions, objects, classes, instances, associated data, or portions thereof suitable for implementation of appropriate computer-readable program code. The term "computer-readable program code" includes any type of computer code, including source code, object code, and executable code. The term "computer-readable recording medium" includes any type of memory that is accessible by a computer, such as read only memory (ROM), random access memory (RAM), hard disk drives, compact disks (CDs), digital video disks (DVDs), or any other type of memory. The "non-transitory" computer-readable recording medium excludes wired, wireless, optical, or other communication links that transmit transient electrical or other signals. The non-transitory computer-readable recording medium includes a medium that allows data to be permanently stored, and a medium that allows data to be stored and overwritten later, such as a rewritable optical disk or an erasable memory device.

Referring to FIG. 1A, the wireless communication system 10 may include a base station (BS) 11 and a user equipment (UE) 100. The BS 11 may generally refer to a fixed station that communicates with the UE 100 and/or another BS (not shown). The BS 11 may exchange control information and data by communicating with the UE 100 and/or other cells (not shown). For example, the BS 11 may be referred to as a Node B, an evolved-Node B (eNB), a next generation Node B (gNB), a sector, a site, a base transceiver system (BTS), an access point (AP), a relay node, a remote radio head (RRH), a radio unit (RU), a small cell, a wireless device, and the like.

The UE 100 may be stationary or mobile and may refer to any device capable of communicating with the BS 11 to transmit and receive data and/or control information. For example, the UE 100 may be referred to as a terminal, a terminal equipment, a mobile station (MS), a mobile terminal (MT), a user terminal (UT), a subscribe station (SS), a wireless device, a handheld device, and the like.

Referring further to FIG. 1B, the horizontal axis may represent a time domain, and the vertical axis may represent a frequency domain. A minimum (e.g., smallest) transmission unit in the time domain is an orthogonal frequency division multiplexing (OFDM) symbol, and $N_{symb}$ OFDM symbols 202 may be gathered to configure (e.g., may collectively form) one slot 206. Two slots may be gathered to configure (e.g., may collectively form) one subframe 205. For example, the length of the slot 206 may be about 0.5 ms, and the length of the subframe 205 may be about 1.0 ms. However, this is only an example. The length of the slot 206 may vary depending on the configuration of the slot 206, and the number of slots 206 included in the subframe 205 may vary depending on the length of the slot 206. On the other hand, in an NR network, the time-frequency domain may be defined centered on the slot 206. In addition, a radio frame 214 may be the unit of the time domain including ten subframes 205.

A minimum (e.g., smallest) transmission unit in the frequency domain is a subcarrier, and an entire system transmission bandwidth may be configured with a total of $N_{BW}$ subcarriers 204. A basic (e.g., smallest) unit of a resource in the time-frequency domain is a resource element (RE) 212, which may be represented by an OFDM symbol index and a subcarrier index. A resource block (RB) 208 may be defined as $N_{symb}$ consecutive OFDM symbols 202 in the time domain and $N_{RB}$ consecutive subcarriers 210 in the frequency domain. Therefore, one RB 208 may include $N_{symb}$* $N_{RB}$ REs 212. An RB pair is a unit of two RBs concatenated on the time domain and may include $N_{symb}$*$2N_{RB}$ REs 212.

The UE 100 generate communication environment information by performing wireless communication with the BS 11. The communication environment information includes position information about the UE 100 and further includes any one of sensor information about the UE 100, information related to a reception operation of the UE 100, and/or information related to a transmission operation of the UE 100.

In embodiments, the BS 11 may provide wireless broadband access to the UE 100 within a coverage 1 of the BS 11. The BS 11 may transmit and receive information related to communication environment information to and from the UE 100 within the coverage 1 of the BS 11 through uplink or downlink, and the UE 100 may generate the communication environment information based on the information related to communication environment information. For example, the communication environment information may include global positioning system (GPS) information, frequency band information and/or system bandwidth information about the UE 100, a serving cell identifier (ID) for identifying the coverage 1 of the BS 11, a neighbor cell ID list for identifying the coverage of other BSs (not shown) around the BS 11, a serving cell reference signal received power (RSRP) indicating a power distribution of the RE 212 including a reference signal for the coverage 1 of the BS 11, a serving cell reference signal received quality (RSRQ) that refers to a signal-to-noise interference ratio for the coverage 1 of the BS 11, a received signal strength indicator (RSSI) that refers to a received power measured across an entire band, a neighbor cell RSRP indicating a power distribution of the RE 212 including reference signals for other BSs (not shown) around the BS 11, a signal-to-noise ratio (SNR), measurement information for a radio channel of the UE 100 (e.g., delay spread, power delay profile, Doppler shift and/or Doppler spread, etc.), a reference signal time difference (RSTD) indicating position information about the UE 100, timing offset measurement, frequency offset measurement, uplink transmission power, uplink timing advance used to adjust the arrival time of the subframe, network configuration (e.g., transmission mode or reference symbol configuration, etc.) information that refers to a processor assigning network settings, policy and/or control, and/or sensor information (e.g., accelerator, gyroscope, thermal data, and/or proximity) indicating a position inside a building.

Hereinafter, communication environment information in some examples will be described as including the aforementioned information, but the inventive concepts are not limited thereto. For example, the respective pieces of the information included in the communication environment information may be given different weights, or only some pieces (e.g., a subset) of the information included in the communication environment information may be selectively used. Furthermore, in addition to the aforementioned information, pieces of information defined in the communication standards may be included.

The UE 100 may periodically generate communication environment information (the communication environment information may be generated once, or a plurality of times and may be generated continually, periodically, or intermittently). In embodiments, pieces of information included in the communication environment information may have different periods, and the period of receiving the communication environment information may be specified according to a radio access technology (RAT) supported by the UE 100. For example, the communication environment information may be generated by the UE 100 for every $n^{th}$ slot 206 (where n is a positive integer), or may be generated by the UE 100 every $m^{th}$ subframe 205 (where m is a positive integer).

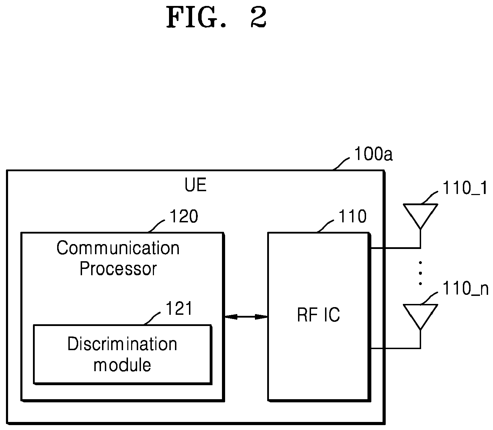

FIG. 2 is a block diagram illustrating an implementation example of a UE 100a according to embodiments. In embodiments, the UE 100a of FIG. 2 may be an example of the UE 100 of FIG. 1A, and descriptions redundant to those of FIG. 1A are omitted. Referring to FIG. 2, the UE 100a may include a radio frequency integrated circuit (RF IC) 110, a plurality of antennas 110_1 to 110_n and/or a communication processor 120.

The RF IC 110 may receive RF signals transmitted by the BS 11 of FIG. 1A through the antennas 110_1 to 110_n. The RF IC 110 may down-convert the received RF signals into intermediate frequency or baseband signals. The RF IC 110 may generate data signals by filtering, decoding, and/or digitizing the intermediate frequency or baseband signals. In addition, the data signals may be encoded, multiplexed, and/or analogized. The RF IC 110 may up-convert the intermediate frequency or baseband signals into RF signals and transmit the RF signals through the antennas 110_1 to 110_n. The RF IC 110 may include a transmission filter, a reception filter, an amplifier, a mixer, an oscillator, a digital-to-analog converter (DAC), an analog-to-digital converter (ADC), and the like. In addition, the RF IC 110 may further include a plurality of RF chains (not shown) and may perform beamforming using the antennas 110_1 to 110_n. The RF IC 110 may adjust the phase and amplitude of each signal transmitted and received through the antennas 110_1 to 110_n for beamforming. Furthermore, the RF IC 110 may perform multi input multi output (MIMO) and may receive multiple layers during a MIMO operation. The RF IC 110 may be referred to as a transmitter, a receiver, a transceiver, or a communicator.

In embodiments, the RF IC 110 may transmit and receive information related to the communication environment information to and from the BS 11 of FIG. 1A through the antennas 110_1 to 110_n. For example, the RF IC 110 may generate the communication environment information including the information described with reference to FIG. 1A, based on the information transmitted and received through the antennas 110_1 to 110_n.

In embodiments, the UE 100a may further include a sensor(s) (not shown) that generates information about an accelerator (e.g., acceleration), a gyroscope (e.g., orientation and/or angular velocity), thermal data, and/or proximity. The information generated by the sensor (not shown) may be sensor information indicating the position of the UE 100a, such as the inside of the building. The RF IC 110 may obtain the sensor information from the sensor (not shown) and generate the communication environment information based on the sensor information.

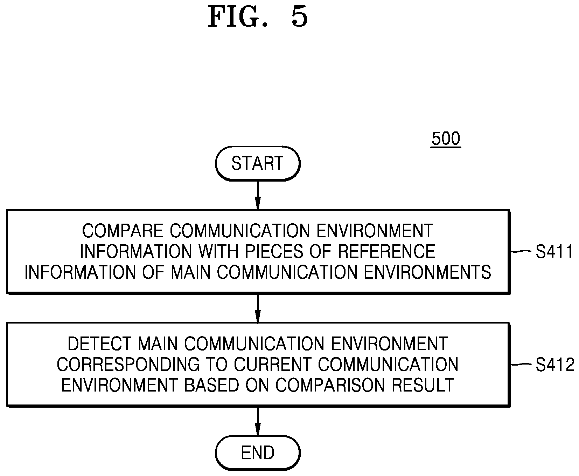

The UE 100a may further include a user interface (not shown). The user interface (not shown) may receive an input from a user of the UE 100a. Main communication environments may include at least one of an environment set to correspond to a specific communication environment indicated by the input received by the user interface (not shown) (e.g., user-defined communication environments) or an environment set to correspond to a past communication environment whose occurrence frequency exceeds a threshold frequency (e.g., communication environments in which the UE 100a frequently performs communications). In this regard, embodiments are described below with reference to FIG. 5. According to embodiments, communication environments as discussed herein may refer to an environment in which the UE 100a performs communication and each may be defined by, for example, communication environment information representative of the environment. As such, the communication environment information representing a corresponding environment may be considered a fingerprint of that environment for use in identifying the environment. As discussed above, the UE 100a may maintain (e.g., record) a plurality of main communication environments, each of which may be defined by respective communication environment information and each of which may be associated with respective communication parameters for use by the UE 100a when performing communication within the corresponding main communication environment. According to embodiments, the current communication environment may correspond to a communication environment of the UE 110a contemporaneous with the communication based on which the communication environment information is generated. Thus, a main communication environment may correspond to one or more environments associated with communication environment information and having associated communication.

The communication processor 120 may control overall operations of the UE 100a. In embodiments, the communication processor 120 may include a discrimination module 121 that receives communication environment information from the RF IC 110 and determines, based on the received communication environment information, whether a current communication environment corresponds to one of main communication environments (e.g., whether the communication environment information of the current communication environment matches the fingerprint of one of the main communication environments maintained by the UE 100a). The current communication environment may be a communication environment determined based on communication environment information currently (or recently) received in a specific period. For example, the discrimination module 121 may compare the communication environment information with pieces of reference information of the main communication environments. According to embodiments, the pieces of reference information may include data of the same type, or similar types, to that contained in the communication environment information. The discrimination module 121 may generate a comparison result by using a statistical characteristic including variance, mean, or correlation, and may determine, based on the comparison result, whether the current communication environment corresponds to one of the main communication environments. The discrimination module 121 may determine whether the current communication environment corresponds to one of the main communication environments, based on an output result obtained by inputting the communication environment information to a machine learning model.

In embodiments, when the discrimination module 121 determines that the current communication environment corresponds to one of the main communication environments, the discrimination module 121 can set the values of communication parameters so that the current communication environment matches the main communication environment corresponding to one of the main communication environments. According to embodiments, the discrimination module 121 may set the values of the communication parameters to be consistent to (or similar to) communication parameters associated with the main communication environment determined to correspond to the current communication environment. The communication processor 120 can control the RF IC 110 based on the set communication parameters. For example, the communication parameters may include a hand-over parameter indicating a specific cell area in which the performance of the UE 100a is optimized (or improved) among the cell areas of other BSs (not shown) around the BS 11 of FIG. 1A, a downlink MIMO control parameter indicating whether the UE 100a receives the optimal rank (or an improved rank) from the BS 11 of FIG. 1A according to the channel environment, an uplink MIMO control parameter indicating whether the UE 100a transmits the optimal rank (or an improved rank) to the BS 11 of FIG. 1A according to the channel environment, an interference management parameter to minimize (or reduce) interference that changes in real time, a downlink time-frequency synchronization parameter indicating time-frequency information between the UE 100a and the BS 11 of FIG. 1A, a downlink channel estimation parameter indicating the form of the channel, a channel coding control parameter indicating the optimal number of iterations (or an improved number of iterations) in a decoding process, an uplink power control parameter indicating optimal power (or an improved power level) when the UE 100a transmits a signal to the BS 11 of FIG. 1A, UE power control, or uplink timing advance indicating the time to transmit a signal when the UE 100a transmits a signal to the BS 11 of FIG. 1A, and the like.

Hereinafter, the communication parameters in embodiments will be described as including the aforementioned parameters, but the inventive concepts are not limited thereto. For example, in addition to the aforementioned parameters, parameters for optimizing or improving transceiver control of the UE 100a in a specific environment may be included.

The UE 100a according to embodiments may recognize the communication environment designated by the user or the communication environment to which the UE is mainly exposed, as the main communication environment, based on the communication environment information, and may set the values of the communication parameters so as to match the main communication environment. Because the UE 100a may perform wireless communication with the BS 11 of FIG. 1A by controlling the RF IC 110 based on the communication parameters set so as to match the main communication environment, the UE 100a may perform wireless communication optimized (or improved) for the main communication environment.

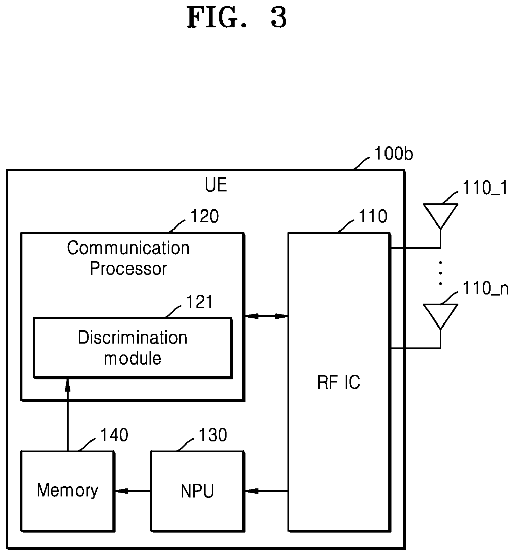

FIG. 3 is a block diagram illustrating an implementation example of a UE 100b according to embodiments. In embodiments, the UE 100b of FIG. 3 may be an example of the UE 100a of FIG. 2.

Referring to FIG. 3, the UE 100b may include an RF IC 110, a plurality of antennas 110_1 to 110_n, a communication processor 120, a neural processing unit (NPU) 130, and/or a memory 140. The RF IC 110, the antennas 110_1 to 110_n, and the communication processor 120 in FIG. 3 may be the same as (or similar to) the RF IC 110, the antennas 110_1 to 110_n, and the communication processor 120 in FIG. 2, respectively, and descriptions redundant to those of FIG. 2 are omitted.

The memory 140 may have any data storage structure. For example, the memory 140 may include a volatile memory device such as dynamic random access memory (DRAM) or static random access memory (SRAM), and may also include a non-volatile memory device such as flash memory or resistive random access memory (RRAM).

The NPU 130 may be a device that generates a machine learning model and may implement a neuromorphic structure. In embodiments, the NPU 130 may receive the communication environment information from the RF IC 110 and may generate the machine learning model based on the received communication environment information. For example, the trained machine learning model that is generated by the NPU 130 based on the communication environment information may be a model using latent variables, and the machine learning model that is generated by the NPU 130 may be stored in the memory 140. The discrimination module 121 may embed the communication environment information into low-dimensional latent variables by using the machine learning model stored in the memory 140. The discrimination module 121 may apply a statistical characteristic including variance, mean, or correlation to the embedded values. When the value to which the statistical characteristic is applied is less than a threshold value, the discrimination module 121 may determine that the current communication environment corresponds to one of the main communication environments. The embedding may refer to a result or an entire process of converting natural language into a vector, which is a sequence of numbers that a machine is able to understand. In addition, the machine learning model that is generated by the NPU 130 based on the communication environment information may be a binary classification model, and the machine learning model that is generated by the NPU 130 may be stored in the memory 140. The discrimination module 121 may use the machine learning model stored in the memory 140 to output a value of 1 when the current communication environment corresponds to one of the main communication environments and to output a value of 0 when the current communication environment does not correspond to the one of the main communication environments.

The UE 100b according to embodiments may use the machine learning model to recognize the communication environment designated by the user or the communication environment to which the UE is mainly exposed, as the main communication environment, based on the communication environment information, and may set the values of the communication parameters so as to match the main communication environment. Because the UE 100b uses the machine learning model to quickly determine whether the current communication environment corresponds to one of the main communication environments, the UE 100b may perform wireless communication optimized (or improved) for the main communication environment.

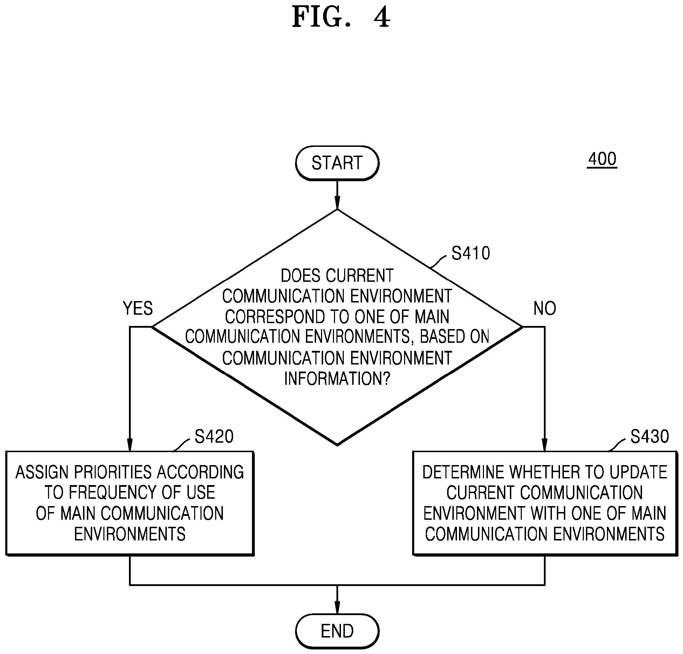

FIG. 4 is a flowchart for describing a main communication environment recognition operation of a UE, according to embodiments. As illustrated in FIG. 4, an operating method 400 of a UE may include a plurality of operations S410 to S430. In embodiments, the operating method 400 of the UE in FIG. 4 may be an example of the operating method of the UE 100a of FIG. 2.

Referring to FIGS. 2 and 4, in operation S410, it is determined whether the current communication environment corresponds to one of the main communication environments, based on the communication environment information. In embodiments, the current communication environment may be a communication environment determined based on communication environment information currently received in a specific period, and the discrimination module 121 may determine, based on the communication environment information, whether the current communication environment corresponds to one of the main communication environments.

In operation S420, when the discrimination module 121 determines in operation S410 that the current communication environment corresponds to one of the main communication environments, based on the communication environment information, priorities may be assigned according to the frequency of use of the main communication environments. In embodiments, the UE 100a may assign higher priority to a communication environment with a higher frequency of use among the main communication environments. For example, when the discrimination module 121 determines that the current communication environment corresponds to one of the main communication environments (e.g., each time the discrimination module 121 determines this correspondence), the discrimination module 121 may increase an occurrence frequency index of the main communication environment corresponding to the current communication environment. A main communication environment with a greater occurrence frequency index may have a higher priority, and a main communication environment with a least occurrence frequency index may have a lowest priority.

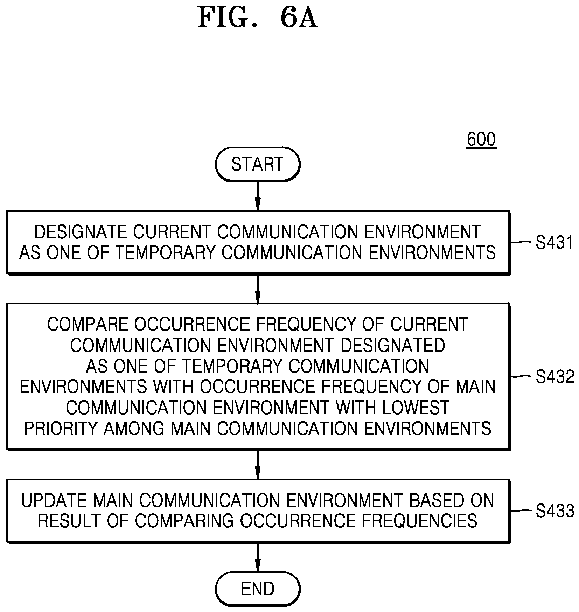

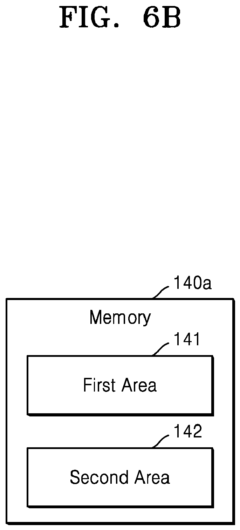

In operation S430, when the discrimination module 121 determines in operation S410 that the current communication environment does not correspond to one of the main communication environments, based on the communication environment information, the discrimination module 121 may determine whether to update the current communication environment with one of the main communication environments. In embodiments, the occurrence frequency of the current communication environment or the value obtained by applying a statistical characteristic to the current communication environment may be used to determine whether to update the current communication environment with one of the main communication environments. In this regard, embodiments are described below with reference to FIGS. 6A and 6B.

FIG. 5 is a flowchart for describing a main communication environment detection operation of a UE, according to embodiments. As illustrated in FIG. 5, the main communication environment detection operation 500 of the UE may include a plurality of operations S411 to S412. In embodiments, the main communication environment detection operation 500 of the UE in FIG. 5 may be an example of operation S410 in FIG. 4.

Referring to FIGS. 2 and 5, in operation S411, communication environment information may be compared with pieces of reference information of main communication environments. The pieces of reference information of the main communication environments may include pieces of information corresponding to pieces of information included in the communication environment information (e.g., the pieces of information described above with reference to FIG. 1A). In operation S412, the main communication environment corresponding to the current communication environment may be detected based on a comparison result.

In embodiments, a first main communication environment among the main communication environments may be a communication environment set to correspond to a specific communication environment indicated by an input received from the user interface (not shown) of the UE 100a. According to embodiments, a main communication environment being set to correspond to another communication environment, as used herein, may refer to setting the other communication environment as one of the plurality of main communication environments maintained by the UE 100a. The discrimination module 121 may compare the communication environment information with the pieces of reference information of the first main communication environments by applying a statistical characteristic. When the value to which the statistical characteristic is applied is less than a threshold value, the discrimination module 121 may determine that the current communication environment corresponds to the first main communication environment, and may detect the first main communication environment. The statistical characteristic may include variance, mean, and/or correlation. For example, when [Math. 1] below is satisfied, the discrimination module 121 may determine that the current communication environment corresponds to the first main communication environment.

[Math. 1]

$$\|\bar{m}_k - m_k\| < \theta$$

The communication environment information may include n pieces of information (where n is a positive integer), and $m_k$ may refer to an actual measurement value of sensor information, which is a $k^{th}$ information (where k is a positive integer less than or equal to n) among the pieces of communication environment information. $\overline{m}_k$ may refer to the mean of the reference sensor information, which is the kth information among the pieces of reference information of the first major communication environment, (e.g., the mean of sensor information in the first main communication environment). $\theta$ may refer to the threshold value, and $\| \|$ may mean a mathematical formula for applying the statistical characteristic (e.g., the mean). $\| \|$ may be transformed into various types of mathematical formulae, such as norm or cosine similarity, according to the values of the variables or the statistical characteristic.

In addition, referring further to FIG. 3, when [Math. 2] below is satisfied, the discrimination module 121 may determine that the current communication environment corresponds to the first main communication environment.

[Math. 2]

$$\| f_{NN}(\overline{m}_k) - f_{NN}(m_k) \| < \theta'$$

$f_{NN}()$ may refer to a function used when the discrimination module 121 embeds the communication environment information into a low-dimensional latent variable by using the trained machine learning model stored in the memory 140, and $f_{NN}()$ may be applied to $m_k$ and $\overline{m}_k$. $\theta'$ may refer to the threshold value, and $\| \|$ may mean a mathematical formula for applying the statistical characteristic (e.g., the mean). $\| \|$ may be transformed into various types of mathematical formulae, such as norm or cosine similarity, according to the values of the variables or the statistical characteristic.

In embodiments, a second main communication environment among the main communication environments may be a communication environment set to correspond to a past communication environment whose occurrence frequency exceeds a threshold frequency. The discrimination module 121 may periodically receive communication environment information (the discrimination module 121 may receive the communication environment information once, or a plurality of times, and may be received continually, periodically, or intermittently) and may determine that the same communication environment (or a similar communication environment) is maintained, based on pieces of communication environment information during M slots (e.g., slots 206 in FIG. 1B). For example, the discrimination module 121 may generate pieces of reference information of the past communication environment based on pieces of communication environment information during M slots, may apply statistical characteristics to the pieces of reference information of the past communication environment, and may determine that the same communication environment (or a similar communication environment) is maintained when the value to which the statistical characteristic is applied is less than the threshold value. When the discrimination module 121 determines that the same communication environment (or a similar communication environment) is maintained, the discrimination module 121 may increase the occurrence frequency of the past communication environment. When the occurrence frequency of the past communication environment exceeds the threshold frequency, the discrimination module 121 may set the second main communication environment so as to correspond to the past communication environment.

In addition, referring further to FIG. 3, the discrimination module 121 may determine that the same communication environment (or a similar communication environment) is maintained by using the trained machine learning model based on pieces of reference information of the past communication environment generated based on the pieces of communication environment information during the M slots, and when the occurrence frequency of the past communication environment exceeds the threshold frequency, the discrimination module 121 may set the second main communication environment so as to correspond to the past communication environment. The trained machine learning model may be a binary classification model. The trained machine learning model may output a value of 1 when the discrimination module 121 determines that the same communication environment (or a similar communication environment) is maintained, and may output a value of 0 when the discrimination module 121 does not determine that the same communication environment (or a similar communication environment) is maintained.

The discrimination module 121 may compare the communication environment information with the pieces of reference information of the second main communication environments by applying a statistical characteristic. When the value to which the statistical characteristic is applied is less than a threshold value, the discrimination module 121 may determine that the current communication environment corresponds to the second main communication environment, and may detect the second main communication environment. When detecting the second main communication environment, [Math. 1] or [Math. 2] may be applied.

In embodiments, in operation S411, the communication environment information may be compared with the pieces of reference information of the main communication environments by taking into account the priorities of main communication environments. That is, the pieces of reference information of the main communication environments may be compared with the communication environment information in descending order of priority. For example, in operation S410 of FIG. 4, the reference information of the main communication environment designated with the highest priority may be first compared with the communication environment information according to the designated priority, and in operation S412, the main communication environment designated with the highest priority may be detected as the main communication environment corresponding to the current communication environment, based on a comparison result. According to embodiments, operation S412 terminates after one of the main communication environments is determined to correspond to the current communication environment. As such, operation S411 may not be performed for the plurality of main communication environments lower on the descending order of priority than the main communication environment corresponding to the current communication environment. In this way, the UE 100a may conserve resources (e.g., power, processor, delay, etc.).

In embodiments, when the same main communication environment (or a similar main communication environment) is continuously detected in operation S412, the period of the communication environment information received in operation S411 may be increased. For example, when the main communication environment with the highest priority designated in operation S410 of FIG. 4 is continuously detected in operation S411, the reception period of the communication environment information may be increased. When the reception period of the communication environment information is increased, optimal (or improved) control of the UE may be maintained because the UE is exposed to the same main communication environment (or a similar main communication environment), and power consumption may be reduced because the number of operations that recognize the main communication environment is reduced.

FIG. 6A is a flowchart for describing an operation of determining whether to update the main communication environment of the UE, according to embodiments. FIG. 6B is a block diagram illustrating an implementation example of a memory 140a of the UE, according to embodiments.

As illustrated in FIG. 6A, an operation 600 of determining whether to update the main communication environment of the UE may include a plurality of operations S431 to S433. In embodiments, the operation 600 of determining whether to update the main communication environment of the UE in FIG. 6A may be an example of operation S430 in FIG. 4, and may be an example of the operating method of the UE 100b in FIG. 3. In embodiments, the memory 140a of FIG. 6B may be an example of the memory 140 of FIG. 3. Descriptions redundant to those of FIG. 3 are omitted.

Referring to FIGS. 3 and 6A, in operation S431, a current communication environment may be designated as one of temporary communication environments. In embodiments, when the current communication environment does not correspond to one of the main communication environments, the discrimination module 121 may designate the current communication environment as one of the temporary communication environments. The temporary communication environment may refer to an environment that is not included in the main communication environments, but is recognized by the discrimination module 121 as the current communication environment at least once based on the communication environment information. When there is no temporary communication environment that corresponds to the current communication environment among the existing temporary communication environments, a new temporary communication environment set so as to correspond to the current communication environment may be generated. According to embodiments, the temporary communication environments may be configured, and maintained by the UE 100a, similar to the main communication environments. For example, each of the temporary communication environments may be defined by respective communication environment information and each of the temporary communication environments may be associated with respective communication parameters for use by the UE 100a when performing communication within the corresponding temporary communication environment.

In operation S432, the occurrence frequency of the current communication environment designated as one of the temporary communication environments may be compared with the occurrence frequency of the main communication environment with the lowest priority among the main communication environments. In embodiments, when the current communication environment is designated as one of the temporary communication environments in operation S431, the occurrence frequency of the designated temporary communication environment may be increased. For example, the occurrence frequency index of the new temporary communication environment may be 1. When the current communication environment is designated as a temporary communication environment with an occurrence frequency index of 1, the occurrence frequency index of the designated temporary communication environment may be updated with 2. In operation S420 of FIG. 4, the occurrence frequency of the main communication environment designated with the lowest priority may be compared with the occurrence frequency of the designated temporary communication environment. In embodiments, the operation of comparing the occurrence frequency of the current communication environment designated as one of the temporary communication environments with the occurrence frequency of the main communication environment with the lowest priority among the main communication environments may be referred to as a background operation for updating the main communication environments.

In operation S433, the main communication environment may be updated based on a result of comparing the occurrence frequencies. In embodiments, when the occurrence frequency of the designated temporary communication environment is greater than the occurrence frequency of the main communication environment designated with the lowest priority, the main communication environment designated with the lowest priority may be updated as the designated temporary communication environment (e.g., replaced by the designated temporary communication environment). When the occurrence frequency of the designated temporary communication environment is less than the occurrence frequency of the main communication environment designated with the lowest priority, the main communication environment designated with the lowest priority may be maintained so as to be included in the main communication environments. For example, when the occurrence frequency index of the designated temporary communication environment is 4 and the occurrence frequency index of the main communication environment designated with the lowest priority is 3, the main communication environment designated with the lowest priority may be deleted and the designated temporary communication environment may be updated as the main communication environment. According to embodiments, through the operations discussed above in connection with FIG. 6A, a temporary communication environment may be added to the plurality of main communication environments with which the communication environment information is compared in operation S411. According to embodiments, operations S432 and S433 may be performed with respect to all of a plurality of temporary communication environments and the plurality of main communication environments. For example, such a process of updating the main communication environments may occur periodically, after a predetermined (or alternatively, given) number of occurrence frequency increments across communication environments, etc. (the updating of the main communication environments may occur once, or a plurality of times, and may occur continually, periodically, or intermittently). The process may involve comparing the occurrence frequencies of all of the temporary communication environments and the occurrence frequencies of all of the main communication environments to determine whether to update any of the temporary communication environments with a respective main communication environment (e.g., replace the main communication environment with a temporary communication environment having a higher occurrence frequency). In the event that a temporary communication environment having a highest occurrence frequency among the temporary communication environments has a higher occurrence frequency than a main communication environment having a lowest occurrence frequency among the main communication environments, the temporary communication environment may be updated with the main communication environment (e.g., the main communication environment may be replaced with the temporary communication environment).

Referring further to FIG. 6B, the memory 140a may include a first area 141 and a second area 142. In embodiments, the main communication environment set so as to correspond to a specific communication environment indicated by an input received from the user interface (not shown) of the UE 100b may be stored in the first area 141, and the main communication environment set so as to correspond to a past communication environment whose occurrence frequency exceeds a threshold frequency may be stored in the second area 142. For example, the first main communication environment of FIG. 5 may be stored in the first area 141, and the second main communication environment of FIG. 5 may be stored in the second area 142.

In embodiments, when the occurrence frequencies are compared in operation S432, main communication environments stored in the first area 141 may be protected, and main communication environments stored in the second area 142 may be unprotected. For example, even when the occurrence frequency index of the first main communication environment stored in the first area 141 has the lowest value among the main communication environments, the first main communication environment may not be assigned the lowest priority, and a comparison between the occurrence frequency of the first main communication environment and the occurrence frequency of the designated temporary communication environment may be prevented (or reduced) in operation S432. Protecting the main communication environment may mean preventing (or reducing occurrence of) the comparison of the protected main communication environment so as to protect the main communication environment from being deleted according to a result of comparing the occurrence frequencies.

The UE according to embodiments may recognize the communication environment designated by the user (e.g., the first main communication environment) or the communication environment to which the UE is mainly exposed (e.g., the second main communication environment) as the main communication environment, based on the communication environment information, and may set the values of the communication parameters so as to match the main communication environment. The main communication environments may be updated based on an occurrence frequency of a newly exposed communication environment (e.g., a temporary communication environment). In addition, by distinguishing between the communication environment designated by the user and the communication environment to which the UE is mainly exposed, the communication environment designated by the user may be prevented from being updated with a newly exposed communication environment (or occurrence of such updates may be reduced). Accordingly, wireless communication adaptively optimized (or improved) for a communication environment that changes in real time may be performed. Even when the occurrence frequency of the UE-specified communication environment is lower, optimized (or improved) wireless communication may be performed when exposed to the corresponding communication environment.

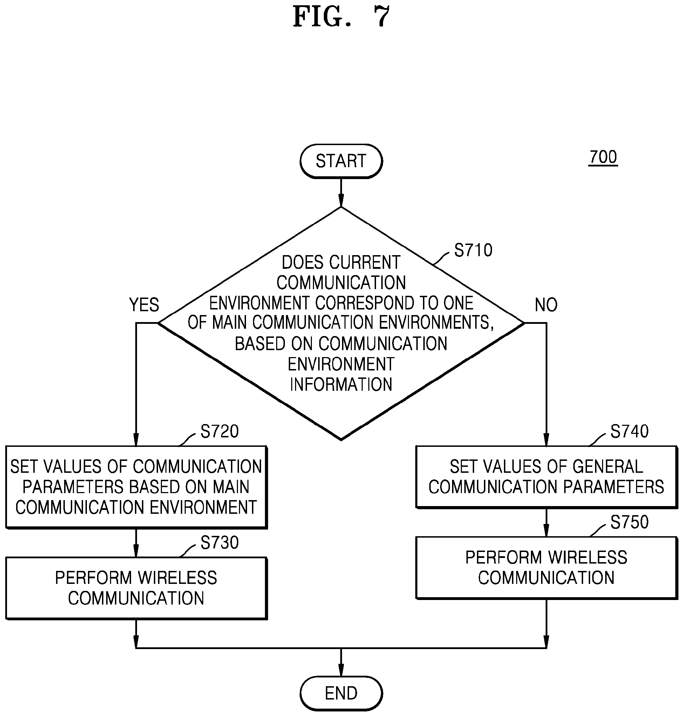

FIG. 7 is a flowchart for describing a wireless communication performing operation of a UE, according to embodiments. As illustrated in FIG. 7, a wireless communication performing method 700 of a UE may include a plurality of operations S710 to S750. In embodiments, the wireless communication performing method 700 of the UE in FIG. 7 may be an example of the operating method of the UE 100a in FIG. 2.

Referring to FIGS. 2 and 7, in operation S710, it may be determined whether the current communication environment corresponds to one of the main communication environments, based on the communication environment information. In embodiments, the current communication environment may be a communication environment determined based on communication environment information currently received in a specific period, and the discrimination module 121 may determine, based on the communication environment information, whether the current communication environment corresponds to one of the main communication environments.

In operation S720, when the discrimination module 121 determines in operation S710 that the current communication environment corresponds to one of the main communication environments, based on the communication environment information, the values of the communication parameters may be set based on the main communication environment. In embodiments, the communication parameters may include the parameters described above with reference to FIG. 2, and the discrimination module 121 may set the values of the communication parameters so that the current communication matches the main communication environment corresponding to one of the main communication environments. For example, the discrimination module 121 may set the values of the communication parameters for transmission and reception data rate optimization (or improvement), power consumption optimization (or improvement), fastest cell area search, or fastest link adaptation so that the current communication matches the main communication environment corresponding to one of the main communication environments, and may change the values of the communication parameters in real time so as to match the main communication environment.

In operation S730, wireless communication may be performed. In embodiments, the UE 100a may perform wireless communication with the BS 11 of FIG. 1A, based on the values of the communication parameters set in operation S720. For example, the UE 100a may perform wireless communication with the BS 11 of FIG. 1A by controlling the RF IC 110 based on the set communication parameters.

When the discrimination module 121 determines in operation S710 that the current communication environment does not correspond to one of the main communication environments, based on the communication environment information, the discrimination module 121 may set values of general communication parameters in operation S740 and may perform wireless communication based on the values of the general communication parameters in operation S750. For example, the communication parameters may be set to the values of the communication parameters based on the main communication environments recognized prior to the current communication environment, or may be set to the values of the general communication parameters that have been designated in advance. According to embodiments, the general communication parameters may be default communication parameters, or may be determined according to known processes.

Because the UE 100a may perform wireless communication with the BS 11 of FIG. 1A by controlling the RF IC 110 based on the communication parameters set so as to match the main communication environment, the UE 100a may perform wireless communication optimized (or improved) for the main communication environment.

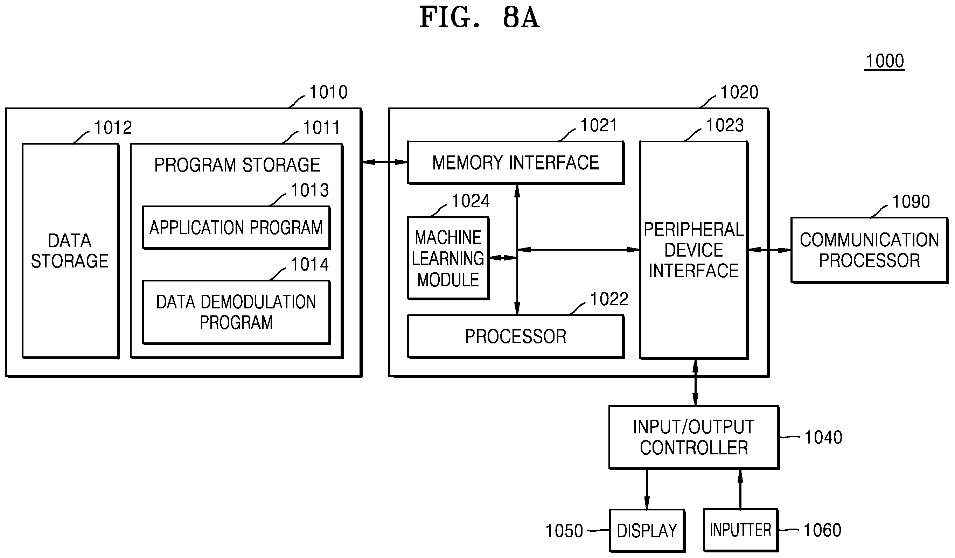

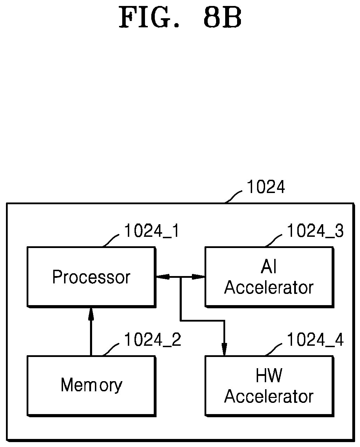

FIG. 8A is a block diagram illustrating an electronic device 1000 according to embodiments. FIG. 8B is a block diagram illustrating an implementation example of a machine learning module 1024 of the electronic device 1000, according to embodiments.

Referring to FIG. 8A, the electronic device 1000 may include a memory 1010, a processor unit 1020, an input/output controller 1040, a display 1050, an inputter 1060, and/or a communication processor 1090. A plurality of memories 1010 may be provided. The respective elements are described below.

The memory 1010 may include a program storage 1011 that stores a program for controlling the operation of the electronic device 1000 and a data storage 1012 that stores data generated during the execution of the program. The data storage 1012 may store data used for operations of an application program 1013 and/or a data demodulation program 1014, or may store data generated during the operations of the application program 1013 and/or the data demodulation program 1014.

The program storage 1011 may include the application program 1013 and/or the data demodulation program 1014. The program(s) included in the program storage 1011 is a set of instructions and may be referred to as an instruction set. The application program 1013 may include program codes for executing various applications operating on the electronic device 1000. That is, the application program 1013 may include codes (or commands) related to various applications driven by a processor 1022.

On the other hand, the electronic device 1000 may include a communication processor 1090 that performs a communication function for voice communication and data communication. A peripheral device interface 1023 may control the connection between the input/output controller 1040, the communication processor 1090, the processor 1022, and/or a memory interface 1021. The processor 1022 may control a plurality of BSs to provide corresponding services by using at least one software program. In this case, the processor 1022 may execute at least one program stored in the memory 1010 to provide a service corresponding to the program.

The communication processor 1090 may generate the communication environment information described above with reference to FIGS. 1A to 7. In embodiments, the BS 11 of FIG. 1A may transmit and receive information related to the communication environment information to and from the communication processor 1090 within the coverage 1 of the BS 11 through uplink or downlink. The communication processor 1090 may generate the communication environment information based on the information transmitted and received to and from the BS.

The electronic device 1000 may further include a machine learning module 1024. The machine learning module 1024 may include the NPU 130 of FIG. 3 and may generate the trained machine learning model described above with reference to FIG. 3. Referring further to FIG. 8B, the machine learning module 1024 may include at least one processor 1024_1, a memory 1024_2, an artificial intelligence (AI) accelerator 1024_3, and/or a hardware (HW) accelerator 1024_4. The at least one processor 1024_1 may execute instructions. For example, the at least one processor 1024_1 may execute the instructions stored in the memory 1024_2 to execute an operating system or applications running on the operating system. In embodiments, the at least one processor 1024_1 may execute the instructions to instruct (e.g., assign, communicate, etc.) tasks to the AI accelerator 1024_3 and/or the HW accelerator 1024_4, and may obtain a task execution result from the AI accelerator 1024_3 and/or the HW accelerator 1024_4. In embodiments, the at least one processor 1024_1 may be an application specific instruction set processor (ASIP) customized for a specific purpose and may support a dedicated instruction set.

The memory 1024_2 may have any data storage structure. For example, the memory 1024_2 may include a volatile memory device such as DRAM or SRAM, and may also include a non-volatile memory device such as flash memory or RRAM.

The AI accelerator 1024_3 may refer to hardware designed for AI applications. In embodiments, the AI accelerator 1024_3 may include the NPU 130 of FIG. 3, may generate output data by processing input data provided from the at least one processor 1024_1 and/or the HW accelerator 1024_4, and may provide the output data to the at least one processor 1024_1 and/or the HW accelerator 1024_4. In embodiments, the AI accelerator 1024_3 may be programmable and may be programmed by the at least one processor 1024_1 and/or the HW accelerator 1024_4.

The HW accelerator 1024_4 may refer to hardware designed to perform a specific task at high speed. For example, the HW accelerator 1024_4 may be designed to perform data conversion, such as demodulation, modulation, or encoding, at high speed. The HW accelerator 1024_4 may be programmable and may be programmed by the at least one processor 1024_1 and/or the HW accelerator 1024_4.

In embodiments, the AI accelerator 1024_3 may execute the machine learning model. For example, the memory 1024_2 may store the communication environment information generated by the communication processor 1090. The AI accelerator 1024_3 may execute the machine learning model, and the at least one processor 1024_1 may train the machine learning module 1024 off-line by using communication environment information. After the training of the machine learning model is completed, the at least one processor 1024_1 may use the trained machine learning model to determine whether the current communication environment corresponds to one of the main communication environments.

The electronic device 1000 may use the machine learning module 1024 to recognize, as the main communication environment, the communication environment designated by the user or the communication environment to which the electronic device 1000 is mainly exposed, and may set the values of the communication parameters so as to match the main communication environment. Because wireless communication with the BS may be performed based on the set communication parameters, wireless communication optimized (or improved) for the main communication environment may be performed.

Referring back to FIG. 8A, the input/output controller 1040 may provide an interface between an input/output device, such as the display 1050 and/or the inputter 1060, and the peripheral device interface 1023. The display 1050 may display state information, input text, moving pictures, and/or still pictures. For example, the display 1050 may display information about application programs driven by the processor 1022.

The inputter 1060 may provide input data, which is generated by the selection of the electronic device 1000, to the processor unit 1020 through the input/output controller 1040. At this time, the inputter 1060 may include a keypad including at least one hardware button, a touchpad that senses touch information, and the like. For example, the inputter 1060 may provide touch information (e.g., touch, touch movement, and/or touch release, which are detected through the touch pad) to the processor 1022 through the input/output controller 1040.

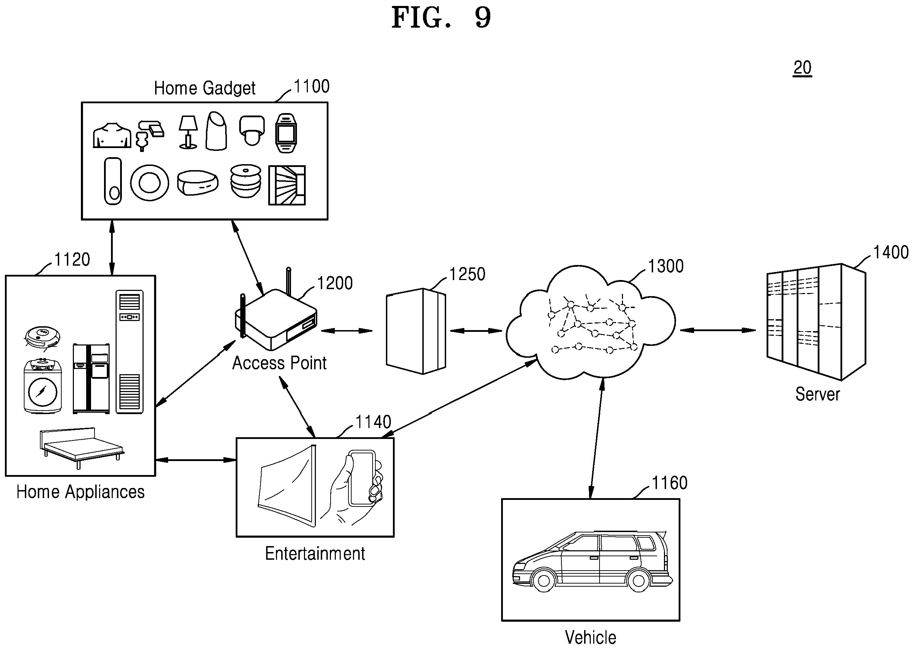

FIG. 9 is a conceptual diagram illustrating an Internet of things (IoT) network system 20, according to embodiments.

Referring to FIG. 9, the IoT network system 20 may include a plurality of IoT devices 1100, 1120, 1140, and/or 1160, an access point 1200, a gateway 1250, a wireless network 1300, and/or a server 1400. The IoT may refer to a network between things using wired/wireless communication.

The IoT devices 1100, 1120, 1140, and 1160 may form a group according to the characteristics of each IoT device. For example, the IoT devices may be grouped into a home gadget group 1100, a home appliance/furniture group 1120, an entertainment group 1140, or a vehicle group 1160. The IoT devices 1100, 1120, and 1140 may be connected to a communication network or other IoT devices through the access point 1200. The access point 1200 may be embedded into one IoT device. The gateway 1250 may change the protocol to connect the access point 1200 to an external wireless network. The IoT devices 1100, 1120, and 1140 may be connected to an external communication network through the gateway 1250. The wireless network 1300 may include the Internet and/or a public network. The IoT devices 1100, 1120, 1140, and 1160 may be connected through the wireless network 1300 to the server 1400 that provides a certain service, and a user may use the service through at least one of the IoT devices 1100, 1120, 1140, and 1160.

The IoT devices 1100, 1120, 1140, 1160 according to embodiments may recognize, as the main communication environment, the communication environment designated by the user or the communication environment to which the UE is mainly exposed, based on the communication environment information, and may set the values of the communication parameters so as to match the main communication environment. Because wireless communication with the BS may be performed based on the set communication parameters, wireless communication optimized (or improved) for the main communication environment may be performed.

Conventional devices and methods for performing wireless communication may permit for adaptation of communication parameters for fixed specific situations. For example, the conventional devices and methods may permit this adaptation when the devices are being used during airplane takeoff or landing, or in a subway station, an airport or an elevator. However, the conventional devices and methods do not permit for adaptation of communication parameters in communication environments beyond the specific predefined situations for which they have been originally configured. Accordingly, the conventional devices and methods provide insufficient communication performance and/or excessive resource consumption (e.g., power, etc.) in communication environments beyond these fixed specific situations.

However, according to embodiments, improved devices and methods are provided for performing wireless communication. The improved devices and methods may recognize when the devices are being used in communication environments beyond those corresponding to the fixed specific situations of the conventional devices and methods. For example, according to embodiments, the improved devices and methods may recognize communication environments in which the devices frequently perform communications and/or communication environments identified via inputs to the devices. As such, the improved devices and methods may dynamically recognize communication environments in which the devices are likely to perform communications, and adapt communication parameters for these communication environments. Accordingly, the improved devices and methods overcome the deficiencies of the conventional devices and methods to at least improve communication performance and/or reduce resource consumption (e.g., power, etc.).

According to embodiments, operations described herein as being performed by the wireless communication system 10, the BS 11, the UE 100, the UE 100a, the RF IC 110, the communication processor 120, the discrimination module 121, the UE 100b, the electronic device 1000, the processor unit 1020, the input/output controller 1040, the communication processor 1090, the peripheral device interface 1023, the processor 1022, the memory interface 1021, the at least one processor 1024_1, the HW, accelerator 1024_4, the IoT network system 20, each of the plurality of IoT devices 1100, 1120, 1140, and/or 1160, the access point 1200, the gateway 1250, and/or the server 1400 may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

In embodiments, the processing circuitry may perform some operations (e.g., the operations described herein as being performed by the NPU 130, the machine learning module 1024 and/or the AI accelerator 1024_3) by artificial intelligence and/or machine learning. As an example, the processing circuitry may implement an artificial neural network (e.g., the NPU 130, the machine learning module 1024 and/or the AI accelerator 1024_3) that is trained on a set of training data by, for example, a supervised, unsupervised, and/or reinforcement learning model, and wherein the processing circuitry may process a feature vector to provide output based upon the training. Such artificial neural networks may utilize a variety of artificial neural network organizational and processing models, such as convolutional neural networks (CNN), recurrent neural networks (RNN) optionally including long short-term memory (LSTM) units and/or gated recurrent units (GRU), stacking-based deep neural networks (S-DNN), state-space dynamic neural networks (S-SDNN), deconvolution networks, deep belief networks (DBN), and/or restricted Boltzmann machines (RBM). Alternatively or additionally, the processing circuitry may include other forms of artificial intelligence and/or machine learning, such as, for example, linear and/or logistic regression, statistical clustering, Bayesian classification, decision trees, dimensionality reduction such as principal component analysis, and expert systems; and/or combinations thereof, including ensembles such as random forests.

Herein, the machine learning model may have any structure that is trainable, e.g., with training data. For example, the machine learning model may include an artificial neural network, a decision tree, a support vector machine, a Bayesian network, a genetic algorithm, and/or the like. The machine learning model will now be described by mainly referring to an artificial neural network, but embodiments are not limited thereto. Non-limiting examples of the artificial neural network may include a convolution neural network (CNN), a region based convolution neural network (R-CNN), a region proposal network (RPN), a recurrent neural network (RNN), a stacking-based deep neural network (S-DNN), a state-space dynamic neural network (S-SDNN), a deconvolution network, a deep belief network (DBN), a restricted Boltzmann machine (RBM), a fully convolutional network, a long short-term memory (LSTM) network, a classification network, and/or the like.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm and functions described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (e.g., the memory 140, the memory 1010 and/or the memory 1024_2). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

While the inventive concepts have been particularly shown and described with reference to embodiments thereof, it will be understood that various changes in form and details may be made therein without departing from the scope of the following claims. Embodiments are set out in the following numbered clauses:

Clause 1. An operating method of a user equipment (UE), the operating method comprising:

generating communication environment information by performing wireless communication with a base station (BS), the communication environment information including position information corresponding to the UE, and at least one of, sensor information corresponding to the UE, information related to a reception operation of the UE, or information related to a transmission operation of the UE;
determining whether a current communication environment corresponds to one of a plurality of main communication environments based on the communication environment information;
setting values of communication parameters to match a first main communication environment in response to determining that the current communication environment corresponds to the first main communication environment, the first main communication environment being among the plurality of main communication environments; and
performing wireless communication with the BS based on the values of the communication parameters.

Clause 2. The operating method of clause 1, wherein the determining of whether the current communication environment corresponds to one of the plurality of main communication environments is performed using a machine learning model.

Clause 3. The operating method of clause 1 or 2, wherein a second main communication environment among the plurality of main communication environments is set to correspond to a specific communication environment indicated by an input received on a user interface of the UE.

Clause 4. The operating method of clause 3, wherein a third main communication environment among the plurality of main communication environments is set to correspond to a past communication environment, the past communication environment having an occurrence frequency exceeding a threshold frequency.

Clause 5. The operating method of clause 4, wherein

the first main communication environment is protected from deletion when updating the plurality of main communication environments; and
the second main communication environment is unprotected from deletion when updating the plurality of main communication environments.

Clause 6. The operating method of any one of clauses 1 to 5, wherein the determining of whether the current communication environment corresponds to one of the plurality of main communication environments comprises:

comparing the communication environment information with reference information corresponding to the plurality of main communication environments to obtain a comparison result; and detecting whether the current communication environment corresponds to one of the plurality of main communication environments based on the comparison result.

Clause 7. The operating method of clause 6, wherein the comparing of the communication environment information with the reference information comprises sequentially comparing the communication environment information with the reference information corresponding to each respective main communication environment among the plurality of main communication environments according to an order based on priorities of the plurality of main communication environments.

Clause 8. The operating method of clause 7, wherein the priorities correspond to respective occurrence frequencies of the plurality of main communication environments.

Clause 9. The operating method of clause 7 or 8, further comprising:

designating the current communication environment as one of a plurality of temporary communication environments in response to determining that the current communication environment does not correspond to any of the plurality of main communication environments; comparing an occurrence frequency of the current communication environment with an occurrence frequency of a lowest priority main communication environment among the plurality of main communication environments to obtain a comparing result; and updating the plurality of main communication environments based on the comparing result.

Clause 10. The operating method of any one of clauses 1 to 9, wherein the determining of whether the current communication environment corresponds to one of the plurality of main communication environments comprises determining whether the current communication environment corresponds to one of the plurality of main communication environments using a statistical characteristic, the statistical characteristic including variance, mean, or correlation.

Clause 11. The operating method of any one of clauses 2 to 10 when dependent on at least clause 2, wherein the machine learning model is configured to classify binary classes based on the communication environment information.

Clause 12. An operating method of a user equipment (UE), the operating method comprising:

periodically generating communication environment information by performing wireless communication with a base station (BS), the communication environment information including position information corresponding to the UE and at least one of

sensor information corresponding to the UE, information related to a reception operation of the UE, or

information related to a transmission operation of the UE;

determining whether a current communication environment corresponds to one of a plurality of main communication environments based on the communication environment information; setting values of communication parameters to match a first main communication environment in response to determining that the current communication environment corresponds to the first main communication environment, the first main communication environment being among the plurality of main communication environments, and a second main communication environment among the plurality of main communication environments being set to correspond to a specific communication environment indicated by an input received from a user interface of the UE; and performing wireless communication with the BS based on the values of the communication parameters.

Clause 13. A user equipment (UE) for wireless communication, the UE comprising:

processing circuitry configured to generate communication environment information, the communication environment information including position information about the UE, sensor information about the UE, information related to a reception operation of the UE, and information related to a transmission operation of the UE, determine whether a current communication environment corresponds to one of a plurality of main communication environments based on the communication environment information, and set values of communication parameters such that the current communication environment matches a first main communication environment, the first main communication environment being among the plurality of main communication environments.

Clause 14. The UE of clause 13, further comprising:

a neural processing unit (NPU) configured to generate a trained machine learning model based on the communication environment information,

wherein the processing circuitry is configured to determine whether the current communication environment corresponds to one of the plurality of main communication environments by using the trained machine learning model.

Clause 15. The UE of clause 14, further comprising: a user interface,

wherein one of the plurality of main communication environments is set to correspond to a specific communication environment indicated by an input received from the user interface.

## Claims

1. An operating method of a user equipment, UE, the operating method comprising:

    generating communication environment information, the communication environment information including position information corresponding to the UE, and at least one of, sensor information corresponding to the UE, information related to a reception operation of the UE, or information related to a transmission operation of the UE;

    determining whether a current communication environment corresponds to one of a plurality of main communication environments based on the communication environment information;

    setting values of communication parameters to match a first main communication environment in response to determining that the current communication environment corresponds to the first main communication environment, the first main communication environment being among the plurality of main communication environments; and

    performing wireless communication based on the values of the communication parameters.

2. The operating method of claim 1, wherein at least one of the plurality of main communication environments is set to correspond to a specific communication environment indicated by an input received on a user interface of the UE.

3. The operating method of claim 2, wherein at least one of the plurality of main communication environments is set to correspond to a past communication environment, the past communication environment having an occurrence frequency exceeding a threshold frequency.

4. The operating method of claim 3, wherein

the at least one main communication environment indicated by an input received on a user interface of the UE is protected from deletion when updating the plurality of main communication environments; and

the at least one main communication environment having an occurrence frequency exceeding a threshold frequency is unprotected from deletion when updating the plurality of main communication environments.

5. The operating method of any one of claims 1 to 4, wherein the determining of whether the current communication environment corresponds to one of the plurality of main communication environments comprises:

    comparing the communication environment information with reference information corresponding to the plurality of main communication environments to obtain a comparison result; and

    detecting whether the current communication environment corresponds to one of the plurality of main communication environments based on the comparison result.

6. The operating method of claim 5, wherein the comparing of the communication environment information with the reference information comprises sequentially comparing the communication environment information with the reference information corresponding to each respective main communication environment among the plurality of main communication environments according to an order based on priorities of the plurality of main communication environments.

7. The operating method of claim 6, wherein the priorities correspond to respective occurrence frequencies of the plurality of main communication environments.

8. The operating method of claim 6 or 7, further comprising:

    designating the current communication environment as one of a plurality of temporary communication environments in response to determining that the current communication environment does not correspond to any of the plurality of main communication environments;

    comparing an occurrence frequency of the current communication environment with an occurrence frequency of a lowest priority main communication environment among the plurality of main communication environments to obtain a comparing result; and

    updating the plurality of main communication environments based on the comparing result.

9.  The operating method of any one of claims 1 to 8, wherein the determining of whether the current communication environment corresponds to one of the plurality of main communication environments comprises determining whether the current communication environment corresponds to one of the plurality of main communication environments using a statistical characteristic, the statistical characteristic including variance, mean, or correlation.

10. The operating method of any one of claims 1 to 8, wherein the determining of whether the current communication environment corresponds to one of the plurality of main communication environments is performed using a machine learning model.

11. The operating method of claim 10, wherein the machine learning model is configured to classify binary classes based on the communication environment information.

12. The operating method of any one of claims 1 to 1 1, wherein:

generating communication environment information comprises periodically generating communication environment information by performing wireless communication with a base station, BS; and wherein
performing wireless communication comprises performing wireless communication with the BS based on the values of the communication parameters.

13. A user equipment (UE) for wireless communication, the UE comprising:
processing circuitry configured to:

generate communication environment information, the communication environment information including position information about the UE, and at least one of sensor information about the UE, information related to a reception operation of the UE, and information related to a transmission operation of the UE,
determine whether a current communication environment corresponds to one of a plurality of main communication environments based on the communication environment information, and
set values of communication parameters such that the current communication environment matches a first main communication environment in response to determining that the current communication environment corresponds to the first main communication environment, the first main communication environment being among the plurality of main communication environments.

14. The UE of claim 13, further comprising:

a neural processing unit (NPU) configured to generate a trained machine learning model based on the communication environment information,
wherein the processing circuitry is configured to determine whether the current communication environment corresponds to one of the plurality of main communication environments by using the trained machine learning model.

15. The UE of claim 14, further comprising:
a user interface,
wherein one of the plurality of main communication environments is set to correspond to a specific communication environment indicated by an input received from the user interface.

# FIG. 1A

# FIG. 1B

# FIG. 2

# FIG. 3

# FIG. 4

400

START

S410
DOES CURRENT
COMMUNICATION ENVIRONMENT
CORRESPOND TO ONE OF MAIN
COMMUNICATION ENVIRONMENTS, BASED ON
COMMUNICATION ENVIRONMENT
INFORMATION?

YES                                    NO

S420
ASSIGN PRIORITIES ACCORDING
TO FREQUENCY OF USE
OF MAIN COMMUNICATION
ENVIRONMENTS

S430
DETERMINE WHETHER TO UPDATE
CURRENT COMMUNICATION
ENVIRONMENT WITH ONE OF MAIN
COMMUNICATION ENVIRONMENTS

END

# FIG. 5

500

START

COMPARE COMMUNICATION ENVIRONMENT INFORMATION WITH PIECES OF REFERENCE INFORMATION OF MAIN COMMUNICATION ENVIRONMENTS ⎯ S411

DETECT MAIN COMMUNICATION ENVIRONMENT CORRESPONDING TO CURRENT COMMUNICATION ENVIRONMENT BASED ON COMPARISON RESULT ⎯ S412

END

# FIG. 6A

600

START

DESIGNATE CURRENT COMMUNICATION ENVIRONMENT AS ONE OF TEMPORARY COMMUNICATION ENVIRONMENTS —— S431

COMPARE OCCURRENCE FREQUENCY OF CURRENT COMMUNICATION ENVIRONMENT DESIGNATED AS ONE OF TEMPORARY COMMUNICATION ENVIRONMENTS WITH OCCURRENCE FREQUENCY OF MAIN COMMUNICATION ENVIRONMENT WITH LOWEST PRIORITY AMONG MAIN COMMUNICATION ENVIRONMENTS —— S432

UPDATE MAIN COMMUNICATION ENVIRONMENT BASED ON RESULT OF COMPARING OCCURRENCE FREQUENCIES —— S433

END

# FIG. 6B

# FIG. 7

700

```
START
```

S710

DOES CURRENT COMMUNICATION ENVIRONMENT CORRESPOND TO ONE OF MAIN COMMUNICATION ENVIRONMENTS, BASED ON COMMUNICATION ENVIRONMENT INFORMATION

YES

NO

S720

SET VALUES OF COMMUNICATION PARAMETERS BASED ON MAIN COMMUNICATION ENVIRONMENT

S730

PERFORM WIRELESS COMMUNICATION

S740

SET VALUES OF GENERAL COMMUNICATION PARAMETERS

S750

PERFORM WIRELESS COMMUNICATION

```
END
```

# FIG. 8A

# FIG. 8B

FIG. 9

20

1400 Server

1300

1160 Vehicle

1250

1200 Access Point

1140 Entertainment

1100 Home Gadget

1120 Home Appliances

Europäisches Patentamt

European Patent Office

Office européen des brevets

# EUROPEAN SEARCH REPORT

**Application Number**

EP 24 16 5105

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/056832 A1 (QUALCOMM INC [US]; REN YUWEI [CN] ET AL.) 24 March 2022 (2022-03-24) | 1,13,14 | INV. H04W24/02 H04W4/02 |
| Y | * paragraph [0034] * | 2-6,15 | H04W4/029 |
| A | * paragraph [0064] * * paragraphs [0076], [0077], [0078] * * paragraph [0081] * * paragraph [0094] * | 7-12 | H04W28/06 |
| | ----- | | |
| Y | US 2019/162542 A1 (ZU KEKE [SE] ET AL) 30 May 2019 (2019-05-30) * paragraph [0071] * | 2,5,15 | |
| | ----- | | |
| Y | US 2016/255463 A1 (QUALCOMM INC [US]) 1 September 2016 (2016-09-01) * paragraph [0123] * * paragraphs [1328], [1329] * | 3,4,6 | |
| | ----- | | |

**TECHNICAL FIELDS SEARCHED (IPC)**

H04W

The present search report has been drawn up for all claims

| Place of search | Date of completion of the search | Examiner |
|---|---|---|
| Munich | 6 August 2024 | Mele, Marco |

EPO FORM 1503 03.82 (P04C01)

## ANNEX TO THE EUROPEAN SEARCH REPORT
## ON EUROPEAN PATENT APPLICATION NO.

EP 24 16 5105

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2024

| Patent document cited in search report | Publication date | Patent family member(s) | | Publication date |
|---|---|---|---|---|
| WO 2022056832 A1 | 24-03-2022 | CN | 116235447 A | 06-06-2023 |
| | | EP | 4214966 A1 | 26-07-2023 |
| | | US | 2023276208 A1 | 31-08-2023 |
| | | WO | 2022056832 A1 | 24-03-2022 |
| US 2019162542 A1 | 30-05-2019 | CN | 109564096 A | 02-04-2019 |
| | | EP | 3497404 A1 | 19-06-2019 |
| | | KR | 20190022841 A | 06-03-2019 |
| | | US | 2019162542 A1 | 30-05-2019 |
| | | WO | 2018030925 A1 | 15-02-2018 |
| US 2016255463 A1 | 01-09-2016 | BR | 112017018359 A2 | 17-04-2018 |
| | | CN | 107251586 A | 13-10-2017 |
| | | EP | 3262878 A1 | 03-01-2018 |
| | | JP | 2018512767 A | 17-05-2018 |
| | | KR | 20170123625 A | 08-11-2017 |
| | | US | 2016255463 A1 | 01-09-2016 |
| | | WO | 2016137658 A1 | 01-09-2016 |

EPO FORM P0459

For more details about this annex : see Official Journal of the European Patent Office, No. 12/82